# EUROPEAN PATENT SPECIFICATION

(11) **EP 3 879 959 B1**
(45) Date of publication and mention of the grant of the patent: **23.09.2026**
(21) Application number: 19809347.8
(22) Date of filing: 05.11.2019
(51) Int. Cl.: A01D 41/14

(54) **HARVESTER HEADER WITH TILTED TOP BEAM**
ERNTEVORSATZ MIT GENEIGTEM OBERBALKEN
TÊTE D'ABATTAGE DE MOISSONNEUSE À POUTRE SUPÉRIEURE INCLINÉE

(30) Priority: 16.11.2018 US 201862768245 P
(43) Date of publication of application: 22.09.2021
(73) Proprietor: CNH Industrial Belgium NV, 8210 Zedelgem (BE)
(72) Inventor: KEMMERER, Benjamin David, Hamburg, PA 19526 (US); NOLL, Blaine Robert, Fleetwood, PA 19522 (US); FARLEY, Herbert M., Elizabethtown, PA 17022 (US)
(74) Representative: CNH Industrial IP Department
(86) International application number: PCT/US2019/059782
(87) International publication number: WO 2020/101940

(56) References cited:
- DE-A1- 3 830 908
- DE-U1- 202008 005 596
- US-A1- 2008 295 473
- US-B1- 8 087 224

## Description

### BACKGROUND

The disclosure relates generally to control of a harvester. More specifically, the present disclosure relates to a harvester with a tilted top beam.

A harvester may be used to harvest agricultural crops, such as barley, beans, beets, carrots, corn, cotton, flax, oats, potatoes, rye, soybeans, wheat, or other plant crops. Moreover, a harvester (e.g., combine harvester) is a type of harvester generally used to harvest certain crops that include grain (e.g., barley, corn, flax, oats, rye, wheat, etc.). During operation of a harvester, the harvesting process may begin by removing a plant from a field, such as by using a header. The header may cut the agricultural crops and transport the cut crops to a processing system of the harvester.

Generally, the harvester may be driven through a field to collect and process crops. As the harvester encounters agricultural crops in the field, the header, which is positioned at a front of the harvester, cuts a portion of each crop. Certain components of the harvester, such as the header, may be adjustable to enhance performance of the harvester. Unfortunately, when operating the header certain components may not be as visible. It would be beneficial to improve visibility of header components. US 2008/0295473 A1 discloses a header for a combine comprising a center portion and at least one lateral portion that is attached to the center portion by a frame hinge. A draper comprised of a frame and a belt disposed to rotate over the frame extends from the lateral portion to the center portion having a draper hinge. A cutter having a curving portion is disposed at a leading edge of the header to cut crop. The lateral portion can raise and lower relative to the center portion by rotation around the axis.

### SUMMARY

Certain embodiments commensurate in scope with the originally claimed subject matter are summarized below. These embodiments are not intended to limit the scope of the claimed subject matter, but rather these embodiments are intended only to provide a brief summary of possible forms of the disclosure. Indeed, the disclosure may encompass a variety of forms that may be similar to or different from the embodiments set forth below.

The invention refers to a header system as defined in appended claim 1.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an embodiment of a harvester having a header, in accordance with an aspect of the present disclosure;
FIG. 2 is a perspective view of an embodiment of a header that may employed within the harvester of FIG. 1, in accordance with an aspect of the present disclosure;
FIG. 3 is a perspective view illustrating further details of an embodiment of a hinged mechanism pivotably coupling a first tilted top beam of the header of FIG. 2 to a center tilted top beam of the header of FIG. 2, in accordance with an aspect of the present disclosure;
FIG. 4 is a rear perspective view of an embodiment of the hinged mechanism of FIG. 3 pivotable coupling the first tilted top beam to the center tilted top beam, in accordance with an aspect of the present disclosure;
FIG. 5 is a side view of an embodiment of the header of FIGS. 2-4 illustrating a line-of-sight ray or line, in accordance with an aspect of the present disclosure;
FIGS. 6A and 6B are a side views comparing embodiments of an untilted top beam and a tilted top beam, in accordance with an aspect of the present disclosure;
FIG. 7 illustrates embodiments of three shapes that may be used for tilted top beams disposed in the header of FIGS. 2-5, in accordance with an aspect of the present disclosure;
FIG. 8 is a schematic view of an embodiment of a portion of the header of FIGS. 2-5 in which a header segment is in a lowered position, in accordance with an aspect of the present disclosure;
FIG. 9 is a schematic view of an embodiment of a portion of the header of FIGS. 2-5 in which a header segment is in a raised position, in accordance with an aspect of the present disclosure; and
FIG. 10 is a flow chart of an embodiment of a process suitable for manufacturing the header of FIGS. 2-5, in accordance with an aspect of the present disclosure.

### DETAILED DESCRIPTION OF THE DRAWINGS

The process of farming typically begins with planting seeds within a field. Over time, the seeds grow and eventually become harvestable crops. Typically, only a portion of each crop is commercially valuable, so each crop is harvested to separate the usable material from the remainder of the crop. For example, a harvester may cut agricultural crops within a field via a header. The header may also gather the cut agricultural crops into a processing system of the harvester for further processing. The processing system may include a threshing machine configured to thresh the agricultural crops, thereby separating the crops into certain desired agricultural materials, such as grain, and material other than grain (MOG). The desired agricultural materials may be sifted and then accumulated into a tank. When the tank fills to capacity, the materials may be collected from the tank. The MOG may be discarded from the harvester (e.g., via a spreader).

The header may cut crops from the field that are encompassed within the width of the header. The header may include a cutter bar assembly that extends a portion of the width of the header, and the cutter bar assembly may use blades to cut the crops. The cut crops may fall onto the header, and the cut crops may be gathered together, such as via conveyors that run across the header. The gathered agricultural crops may then be transported into the processing system of the harvester.

The header may include certain components, such as conveyors, draper cutter bars, and so on, that would benefit from observation by the operator of the harvester. Accordingly, the techniques described herein include a tilted top beam system that provides for enhanced operator views during header operations. The tilted top beam also serves as a reservoir for certain fluid, such as hydraulic system fluid, e.g., oil. The tilted top beam provides for more surface area contact such that heat generated during operations of the hydraulic system may be more efficiently dissipated.

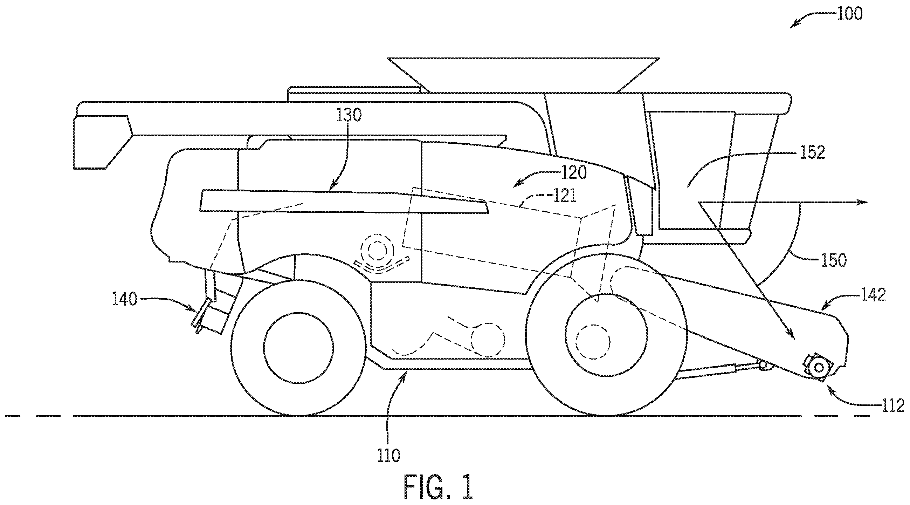

Turning now to the drawings, FIG. 1 is a side view of a harvester 100 having a header. The harvester 100 includes a chassis 110 that supports harvesting apparatus to facilitate harvesting crops. As described in greater detail below, the header 112 (e.g., corn header) that cuts crops and directs the cut crops toward an inlet of a crop processing system 120 of the harvester 100 for further processing of the cut crops. The crop processing system 120 receives cut crops from the header 112. As an example, the crop processing system 120 includes a thresher 121 that conveys a flow of crops through the crop processing system 120. In some embodiments, the thresher 121 includes a cylindrical threshing rotor that transports the crops in a helical flow path. In addition to transporting the crops, the thresher 121 may also separate certain desired crop material (e.g., grain) from residue (e.g., MOG), such as husk and pods, and direct the residue into a cleaning system located beneath the thresher 121. The residue may be transported to a crop residue handling system 130, which may hold the crop residue for further processing and/or expel the crop residue from the harvester 100 via a crop residue spreading system 140 positioned at the aft end of the harvester 100. The figure illustrates an operator line-of-sight angle 150 that may be suitable for the operator in a cab 152 of the harvester to observe certain header 112 components during operations, as further describe below. It should be noted that the figure is not to scale and that the operator line-of-sight angle 150 is an example only.

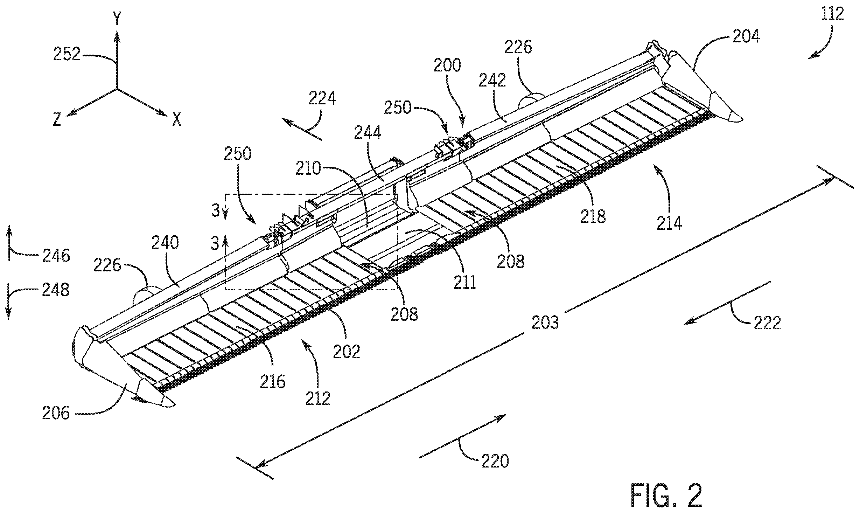

FIG. 2 is a perspective view of an embodiment of a header 112 that may be used by the harvester of FIG. 1. It should be noted that not all components of the header 112 are shown (e.g., reel assembly, etc.). The header 112 includes a frame 200 that may be removably coupled to a frame of the harvester 100. The header 112 also includes a cutter bar assembly 202 that extends across a width 203 of the frame 200 between side portions 204, 206 of the frame 200. When the harvester 100 is in operation, blades of the cutter bar assembly 202 engage and cut the crops. The portions of the crops that are cut may be directed onto a conveyor assembly 208 of the header 112 by a reel assembly. In general, the conveyor assembly 208 is configured to transport cut crops toward an inlet 210 and toward the crop processing system 120.

In the illustrated embodiment, the header 112 includes a center section 211, as well as a first header segment 212 and a second header segment 214 that are each pivotally coupled to opposite ends of the center section 211. The first header segment 212 and the second header segment 214 are independently adjustable. In other words, a position of the first header segment 212 is adjustable independent of a position of the second header segment 214. Likewise, a position of the second header segment 214 is adjustable independent of a position of the first header segment 212.

The cutter bar assembly 202 of the header 112 is flexible to enable the cutter bar assembly 202 to bend in response to adjustment of the first header segment 212 and/or adjustment of the second header segment 214. The cutter bar assembly 202 extends along the center section 211, the first header segment 212, and the second header segment 214. The first header segment 212 includes a first conveyor section 216 of the conveyor assembly 208, and the second header segment 214 includes a second conveyor section 218 of the conveyor assembly 208. The first conveyor section 216 extends a portion of the width 203 of the header 112, and the second conveyor section 218 extends another portion of the width 203 of the header 112. The first conveyor section 216 may direct the crops in a first direction 220 toward the center section 211 and the second conveyor section 218 may direct the crops in a second direction 222 towards the center section 211. The center section 211 may then direct the crops to the inlet 210 in a third direction 224 via another conveyor section of the conveyor assembly 208 toward the crop processing system 120. In certain embodiments, the third direction 224 may be transverse to the first direction 220 and the second direction 222.

The header 112 may include wheels 226 to facilitate movement of the header 112 when the harvester 100 is in operation. The wheels 226 may engage with the ground to control the header height. For example, the wheels 226 may be positioned to control a height of the cutter bar assembly 202 with respect to the ground to control where crops are cut. Specifically, the wheels 226 may enable the cutter bar assembly 202 to contact the ground, in which the position of the header segments 212, 214 adjust to follow the contour of the ground. The wheels 226 may additionally or alternatively be retracted such that the header 112 is in a raised position. In the raised position of the header 112, the cutter bar assembly 202 may not be in contact with the ground and instead, may be a distance (i.e., a cutting height) above the ground. Thus, the position of the header segments 212, 214 may be independently controlled to match the contour of the cutter bar assembly 202 with the contour of the ground and maintain a substantially constant cutting height across the width 203 of the cutter bar assembly 202.

The figure also illustrates three tilted top beams, a first tilted top beam 240, a second tilted top beam 242, and a center section tilted top beam 244. More specifically, the first tilted top beam 240 may be used as support for and to move the entire first header segment or wing section 212 with respect to the center section tilted top beam 244. Likewise, the second tilted top beam 242 may be used as support for and to move the entire second header segment or wing section 214 with respect to the center section tilted top beam 244. Further, the center section tilted top beam 244 may be placed at the center of the frame 200 and used to support certain components of the center section 211 as well as to provide for a platform to move the first and second tilted top beams 240, 242 with respect to the center section 211. For example, the wing section 212 and/or the wing section 214 may be raised or lowered in an upwards direction 246 with respect to ground and in a downwards direction 248 with respect to ground as described further below. Also shown is a 3-dimensional (3D) axis 252.

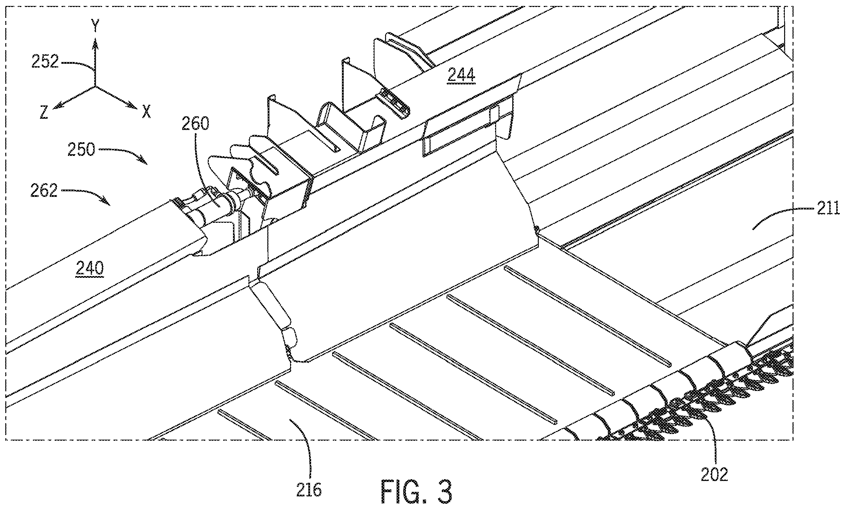

The first section tilted top beam 240 and the second section tilted top beam 242 may each have a beam end proximal to the center section tilted top beam 244. The beam end is pivotably coupled to the center section tilted top beam 244 by hinged mechanisms 250 disposed at both ends of the center section top beam 244, as shown in more detail with respect to FIG. 3. More specifically, FIG. 3 is a perspective view illustrating further details of an embodiment of the hinged mechanism 250 pivotably coupling the first tilted top beam 240 to the center tilted top beam 244. As mentioned earlier, a proximal side of each of the tilted top beams 240, 242 may connected to the center section titled top beam 244 by the hinged mechanism 250.

In use, the hinged mechanism 250 may include a cylinder system 260 suitable for actuation (e.g., hydraulic actuation), for example, to move the first tilted top beam 240 with respect to the center tilted top beam 244. In some embodiments, the center tilted top beam 244, the first tilted top beam 240, and/or the second tilted top beam 242 may be used as a repository (e.g., tank) for hydraulic fluid (e.g., oil) used by the hydraulic system to actuate the cylinder system 260. For example, hydraulic fluid conduits 262 may be connected to the center tilted top beam 244, the first tilted top beam 240, and/or the second tilted top beam 242.

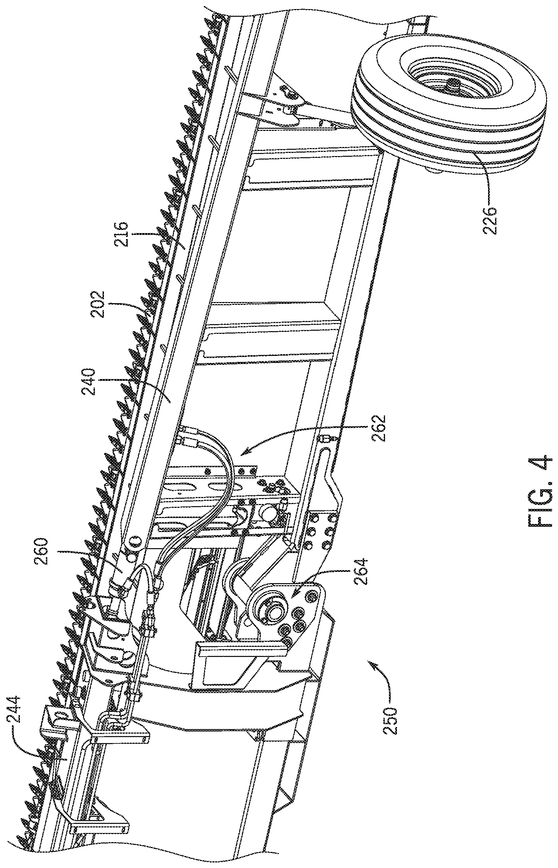

FIG. 4 illustrates a rear perspective view of an embodiment of the hinged mechanism 250 pivotable coupling the first tilted top beam 240 to the center tilted top beam 244. In the depicted embodiment, the hydraulic fluid conduits 262 are shown connected to a bottom portion of the first tilted top beam 240. As mentioned earlier, the first tilted top beam 240, the second tilted top beam 240, the center tilted top beam 244, or a combination thereof, may be used as a repository for hydraulic fluid. For example, the cylinder system 260 may use the hydraulic fluid to rotate or pivot the entire first header segment 212 with respect to the center section tilted top beam 244 about a hinge system 264.

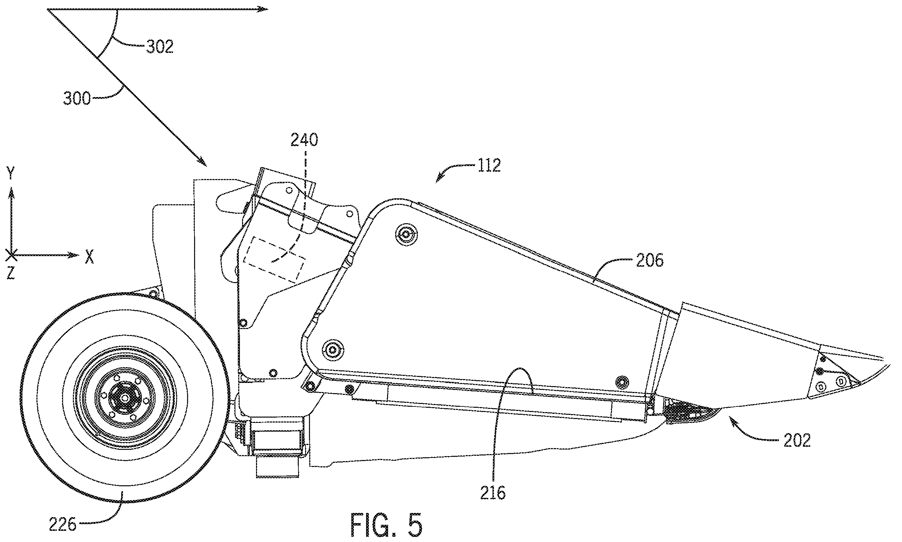

Indeed, the first header segment 212 may pivot about the hinge system 264 to provide for improved ground following capabilities in terrain that may not be level. During operations of the hydraulic system, the hydraulic fluid may experience an increase in temperature. It would be beneficial to provide for heat dissipation, for example, to cool down the hydraulic fluid. Certain geometries and/or positioning of the first tilted top beam 240, the second tilted top beam 242, and/or the central section tilted top beam 244, may provide for increased surface contact for the hydraulic fluid and/or improved operator visibility. For example, tilting the beams 240, 242, and/or 244, as shown in more detail in FIG. 5, may provide both increased visibility, improved stiffness, and increased heat dissipation of hydraulic fluid.

FIG. 5 is a side view of an embodiment of the header 112 illustrating a line-of-sight ray or line 300. As mentioned earlier, the first tilted top beam 240, the second tilted top beam 242, and/or the center tilted top beam 244 may be "tilted" or otherwise angled with respect to the Y-axis so that the operator of the harvester 100 may be able to more clearly see certain components of the header 112, such as the cutter bar assembly 202, the first conveyor section 216, the conveyor section 218, and so on. Indeed, an improved unobstructed view of various components of the header 112 may be achieved by angling or otherwise "tilting" the first tilted top beam 240, the second tilted top beam 242, and/or the center tilted top beam 244.

In some embodiments, each of the first tilted top beam 240, the second tilted top beam 242, and the center tilted top beam 244 may all include the same angle or tilt. In other embodiments, one or all of the first tilted top beam 240, the second tilted top beam 242, and the center tilted top beam 244 may include a different angle or tilt. For example, certain components in one of the sections 210, 211, 212 may benefit from improved visibility at a certain angle or tilt and so the corresponding beam 240, 242, or 244 may be angled based on its respective section 210, 211, 212.

In the depicted embodiment, the line-of-sight 300 is depicted as having an angle 302 when measured against an axis such as the X axis. Based on the angle 302, the first tilted top beam 240, the second tilted top beam 242, and the center tilted top beam 244 may then be tilted during manufacturing to accommodate an improved operator view during header 112 operations. For example, the angle 302 may be equal to the operator line-of-sight angle 150 suitable for viewing desired components of the header 112 during operations of the vehicle 100 (e.g., harvesting operations).

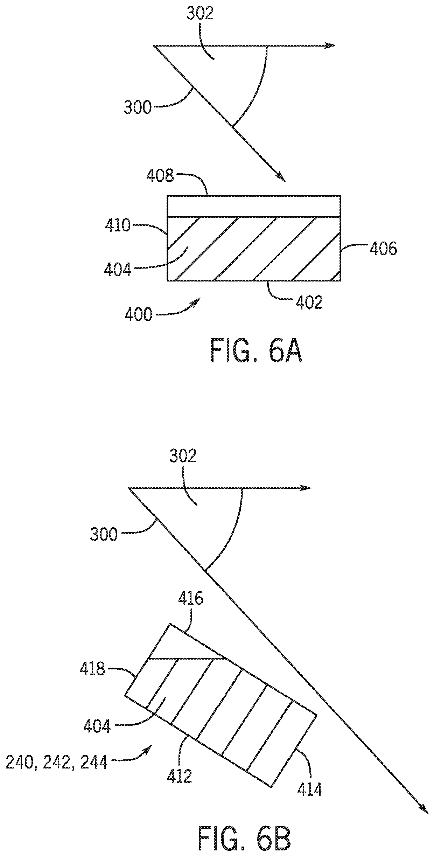

FIG. 6A and 6B are a side view figures comparing embodiments of an untilted beam 400 versus one of the tilted beams 240, 242, and/or 244. More specifically, FIG. 6A illustrated the non-tilted beam 400 disposed with a bottom side 402 level with the top ray of the angle 302. Because the untilted beam 400 is level and not tilted, the untilted beam 400 may obstruct the line-of-sight ray 300. The untilted beam 400 is also shown as being filled with a hydraulic fluid 404. During operations, the hydraulic fluid 404 may be in contact mostly with sides 402, 406, and 410. Side 408 (e.g., top side) may not be in contact with the hydraulic fluid 404. Accordingly, the hydraulic fluid 404 may use three sides 402, 406, and 410 for cooling.

In comparison, the tilted top beams 240, 242, and/or 244 shown in an embodiment of FIG. 6B illustrate how the light-of-sight ray 300 may be unobstructed when a beam is tilted. Accordingly, the operator of the vehicle 100 may have an improved view during header 112 operations. Further, the figure illustrates how the hydraulic fluid 404 may be in contact with all four sides 412, 414, 416, and 418 of the tilted top beams 240, 242, and/or 244. In use, the enhanced surface contact provided by tilting the tilted top beams 240, 242, and/or 244 may provide for a faster and more efficient cooling of the hydraulic fluid 404, thus improving operations of the hydraulic system. It is to be noted that the beam 400 of FIG. 6A is the same beam as the beam(s) shown in FIG. 6B other than being disposed in at a tilt. For example, the sides 402, 404, 406 and 408 are the same sizes and shapes as the sides 412, 414, 416, and 418.

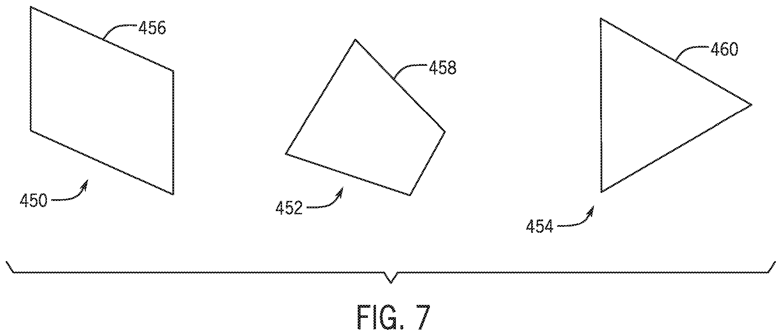

A variety of shapes, such as shapes that that include a tilted top side or end may be used, as shown in FIG. 7. More specifically, the figure shows embodiments of three shapes 450, 452, and 454, that may be used *in lieu* of the square or rectangular shape for the tilted top beams 240, 242, and/or 244. Each of the shapes 450, 452, and 454 include angled top edges 456, 458, and 460, respectively. Shape 450 is a parallelogram shape where having two straight side edges. Shape 452 is trapezoidal, and includes side edges of different lengths. Shape 454 is triangular, and may include sides that are equal lengths or unequal lengths. The angled top edges 456, 458, and 460 may enhance visibility by providing for improved views of the header 112, e.g., by enabling views via the operator line-of-sight angle 302.

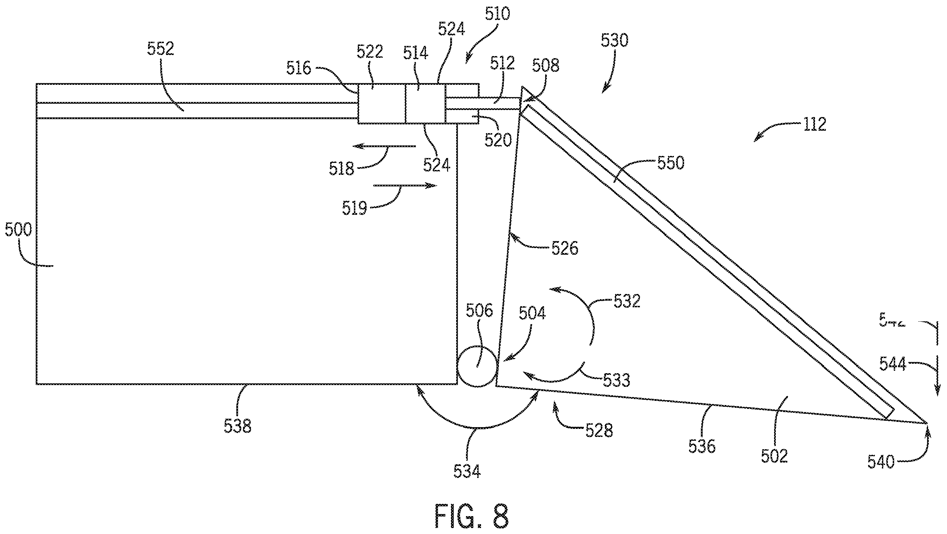

FIG. 8 is a schematic view of an embodiment of a portion of a header (e.g., the header 112 of FIG. 2), in which a header segment is in a lowered position. As shown, the header 112 includes a center section 500 and a header segment 502 (e.g., part of the first header segment or the second header segment of FIG. 2). The center section 500 is configured to receive crops from the header segment 502 (e.g., from the conveyor assembly of the header segment 502) and to direct the crops to the inlet 210. The position (e.g., orientation) of the header segment 502 is adjustable relative to the center section 500. The header segment 502 is rotatably coupled to the center section 500 at a first location 504 via a pivot 506 (e.g., pivot 264 of FIG. 4). At a second location 508, the header segment 502 is coupled to a lift cylinder 510 (e.g., included in the cylinder system 260 of FIGS. 3 and 4) configured to adjust a position (e.g., orientation) of the header segment 502. As illustrated, the header segment 502 is coupled to a rod 512 of the lift cylinder 510. The rod 512 is coupled to a piston 514 disposed within a body 516 of the lift cylinder 510. The piston 514 is configured to move in a first piston direction 518 and a second piston direction 519 within the body 516, such as via a pressure differential between a first section 520 (i.e., the side of the piston 514 where the rod 512 is coupled to the piston 514) of the body 516 and a second section 522 (i.e., the side of the piston 514 without the rod 512) of the body 516. Accordingly, a difference between a pressure in the first section 520 and a pressure in the second section 522 may drive the piston 514 to move the rod 512, thereby adjusting the header segment 502. To block fluid flow around the piston 514, seals 524 are disposed around the piston 514. The seals 524 maintain a desired pressure differential between the first section 520 and the second section 522. As such, fluid pressure may be applied to either the first section 520 or the second section 522 of the piston 514 to create a desired pressure differential to drive the piston 514 into a desired position within the body 516.

As illustrated, the first location 504 and the second location 508 are each disposed on an inner side 526 of the header segment 502. However, the first location 504 is disposed at a first end 528 of the inner side 526, opposite a second end 530 of the inner side 526 where the second location 508 is disposed. As a result, when the piston 514 moves within the body 516, the rod 512 drives the second end 530 to move generally in the first piston direction 518 or the second piston direction 519. However, since the first end 528 is rotatably coupled to the pivot 506, the header segment 502 rotates in a first rotational direction 532 or a second rotational direction 533 about the pivot 506 in response to movement of the second end 530. In this manner, as the piston 514 is moved within the body 516, an angle 534 between a bottom side 536 of the header segment 502 and a bottom side 538 of the center section 500 is adjusted. Further, a position of an outer end 540 of the header segment (e.g., a third end) is adjusted, such as in a first vertical direction 542 and a second vertical direction 544. As described in this disclosure, when the piston 514 is moved in the first piston direction 518, the header segment 502 rotates in the first rotational direction 532 and the outer end 540 is moved in the first vertical direction 542 (i.e., the angle 534 increases) to raise the header segment 502. Furthermore, when the piston 514 is moved in the second piston direction 519, the header segment 502 rotates in the second rotational direction 533 and the outer end 540 is moved in the second vertical direction 544 (i.e., the angle 534 is decreases) to lower the header segment 502. Since the outer end 540 is lower than the bottom side 538 of the center section 500, the header segment 502 is considered to be in a lowered position.

Also show are a tilted top bar 550 (e.g., beam 240 or 242) disposed in the section 502 and a center section tilted top bar 552 (e.g., beam 244) disposed in the section 500. The rod 512 may be mechanically coupled to the tilted top bar 550 so that movement of the rod 512 may result in movement of the entire section 502. That is, the tilted top bar 550 may be mechanically coupled to supports and so on so that the tilted top bar 550 may be used to move (e.g., raise or lower) the section 502.

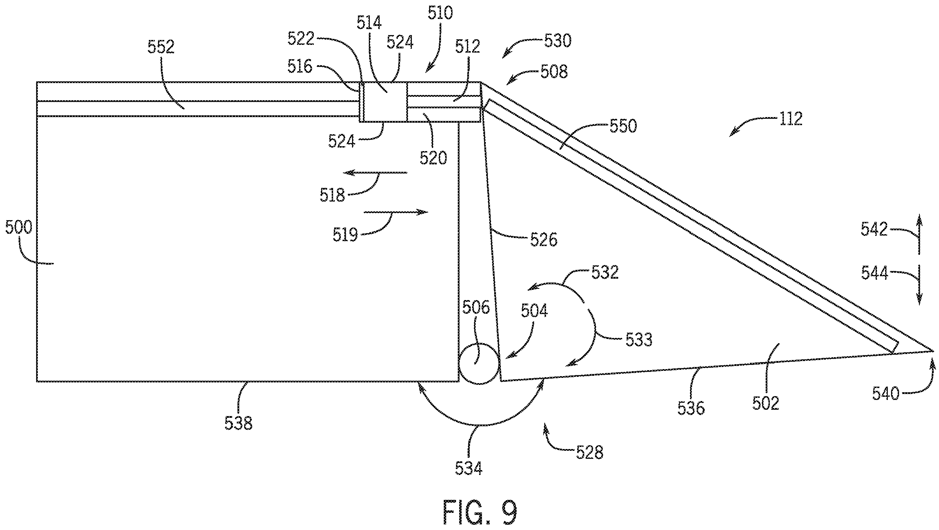

FIG. 9 is a schematic view of the portion of the header of FIG. 8 with the header segment 502 in a raised position. As illustrated, the outer end 540 of the header segment 502 is raised above the bottom side 538. Additionally, as illustrated in FIG. 4, the piston 514 is moved in the first piston direction 518 to retract the rod 512. As a result, the second location 508 is moved in the first piston direction 518 and the header segment 502 is rotated in the first rotational direction 532 to raise the outer end 540 in the first vertical direction 542.

In certain embodiments, incompressible fluid (e.g., a hydraulic fluid 404) may be used to move the piston 514. A certain amount of the fluid may be disposed in the first section 520 and in the second section 522 of the lift cylinder 510, and each section 520, 522 may be connected to a fluid reservoir. When the forces caused by the fluid pressure in the first section 520 and the forces caused by the fluid pressure in the second section 522 are equal, the piston 514 may not move, since the equal forces counteract against one another. To move the piston 514 in the first piston direction 518, the pressure in the first section 520 may be increased, and the increased pressure exerts a force against the piston 514 to move the piston 514 in the first piston direction 518. As the piston 514 moves in the first piston direction 518, fluid from the second section 522 is transferred into the fluid reservoir connected to the second section 522. Similarly, fluid may be removed from the first section 520 to the fluid reservoir connected to the first section 520 to decrease forces caused by the fluid pressure in the first section 520. For example, gravitational forces may drive the piston 514 in the second piston direction 519 and remove fluid from the first section 520. Additionally or alternatively, fluid may be added to the second section 522 to increase the forces caused by the fluid pressure in the second section 522. When the force against the piston 514 in the first section 520 falls below the force against the piston in the second section 522, the piston may move in the second piston direction 519 opposite the first piston direction 518 and as a result, fluid from the fluid reservoir connected to the second section 522 may flow into the second section 522. In this manner, an amount of fluid may be added and/or removed from the first section 520 and/or the second section 522 to control movement of the piston 514 and thus, position adjustment of the header segment 502 via the beam 550.

The header 112 depicted in FIGS. 8 and 9 may include other suitable arrangements. For example, although FIGS. 8 and 9 depict a single header segment 502 is coupled to the center section 500 in the illustrated embodiments, additional or alternative embodiments of the header may include any suitable number of header segments coupled to the center section. Moreover, a header segment may be coupled to the center section in a different manner, such as at a different part of the center section. One header segment may also be coupled to another header segment, rather than the center section, and each header segment may be controlled independently. Furthermore, the shape of each component may be different than that illustrated in FIGS. 8 and 9. By way of example, a header segment may be rectangular and/or each header segment may have a different shape. In further embodiments, raising and lowering the header segment may be driven by moving the piston in the opposite directions as shown in FIGS. 8 and 9. For example, moving the piston in the first piston direction 518 may lower the header segment while moving the piston in the second piston direction 519 may raise the header segment. In such embodiments, the location of the lift cylinder and the pivot may be switched (e.g., the lift cylinder 510 may be disposed at the first end 528, and the pivot 506 may be disposed at the second end 530). Moreover, although the lift cylinder is disposed on the center section with the rod coupled to the second location of the header segment, the lift cylinder may alternatively be disposed on the header segment with the rod coupled to the center section. Further still, certain embodiments may include additional lift cylinders to adjust the position of the header segment. For instance, another lift cylinder may be used instead of the pivot. Accordingly, multiple lift cylinders may be adjusted to raise and lower the header segment.

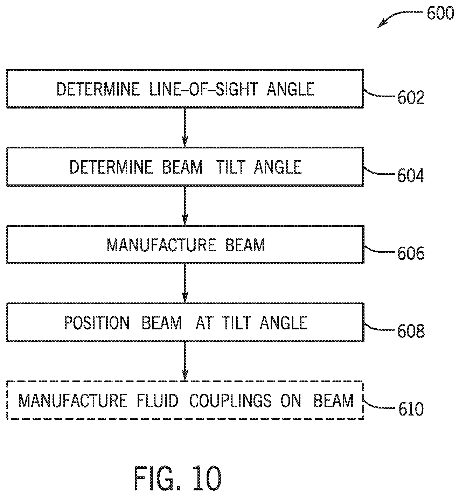

FIG. 10 is a flow chart of an embodiment of a process 600 suitable for manufacturing the header system 112. In the depicted embodiment, the process 600 may determine (block 602) a desired line-of-sight angle, for example, an angle that enables an operator of the vehicle 100 to view at least a portion of cut crop in the center section 211 by looking down from the cab 152 and by looking over the first tilted top beam 240, the second tilted top beam 242, and/or the center section tilted top beam 244. For example, for existing vehicles 100, an inclinometer may be used to determine (block 602) the desired line-of-sight angle. For vehicles 100 to be designed then drawings and the like may be used to measure the desired line-of-sight angle.

The process 600 may then determine (block 604) a beam tilt angle for any one or all of the first tilted top beam 240, the second tilted top beam 242, and the center section tilted top beam 244. For example, based on the desired line-of-sight angle the beams 240, 242, and/or 244 may be tilted at a desired tilt angle so that the operator may look over the beam 240, 242, and/or 244 and see desired components of the header 112 and or crops being harvested, such as crop being moved by the conveyors 216, 218, and conveyor in the center section 211. The process 600 may then manufacture (block 606) the beams 240, 242, and/or 244. For example, the beams may be manufactured using rectangular stock, square stock, or in any one or more of the shapes shown in FIG. 7. The process 600 may then position (block 606) the beams 240, 242, and/or 244 at the desired tilt angle and fasten (e.g., weld, bolt, and so on) the manufactured beams 240, 242, and/or 244 during manufacturing of the sections 210, 211, 212 so as to provide for enhanced visibility during operations of the header 112.

In embodiments where the manufactured beams 240, 242, and/or 244 may be used as reservoirs for hydraulic fluid, the process 600 may manufacture (block 610) on or more fluid couplings on the manufactured beams 240, 242, and/or 244. That is, certain openings (e.g., inlets, outlets, and so forth) may be manufactured on the manufactured beams 240, 242, and/or 244 to receive or otherwise couple with fluid conduits such as the conduits 262.

## Claims

1. A header system (112) comprising:
a first header segment (212) comprising a cutter bar (202) configured to cut crops, and a first portion of a conveyor assembly (208); and
a center section (211) comprising a center section tilted top beam (244) and a second portion of the conveyor assembly (208), wherein the center section (211) is configured to receive cut crops from the first header segment (212) via the first portion of the conveyor assembly (208), wherein the center section tilted top beam (244) is disposed at a first angle tilted relative to ground when the header system (112) is in use,
the header system (112) being **characterized by** a first actuator (260) coupling the first header segment (212) to the center section (211) via the center section tilted top beam (244), wherein the center section tilted top beam (244) is coupled to one or more fluid conduits (262) configured to carry a hydraulic fluid and wherein the center section top tilted beam (244) is configured to be a reservoir for the hydraulic fluid.

2. The system of claim 1, wherein the first angle comprises a line-of-sight angle (302) enabling an operator of the header system (112) to visualize at least a portion of cut crop in the center section (211) by looking down from a cab (152) of a vehicle (100) carrying the header system (112) and by looking over the center section tilted top beam (244).

3. The system of any of claims 1-2, wherein the center section tilted top beam (244) comprises a square shape or a rectangular shape.

4. The system of any of claims 1-3, wherein the first actuator (260) comprises a hydraulic actuator and wherein the hydraulic actuator is fluidly coupled to the center section tilted top beam (244) via the one or more conduits (262).

5. The system of claim 1, comprising the first actuator (260) coupling the first header segment (212) to the center section (211) via the center section tilted head beam (244), wherein the first header segment (212) comprises a first tilted top beam (240) mechanically coupled to the first actuator (260) and configured to move the first header segment (212) based on actuation of the first actuator (260), and wherein the first tilted top beam (240) is disposed at a second angle tilted relative to ground when the header system (112) is in use.

6. The system of claim 5, wherein the first angle is equal to the second angle.

7. The system of claim 5 or 6, wherein the first tilted top beam (240) is coupled to one or more fluid conduits (262) configured to carry a hydraulic fluid and wherein the first tilted top beam (240) is configured to be a reservoir for the hydraulic fluid.

8. The system of any of claims 5-7, comprising:
a second header segment (214) comprising the cutter bar (202) and configured to cut the crops; and a third portion of the conveyor assembly (208), wherein the center section (211) is configured to receive cut crops from the second header segment (214) via the first and the third portions of the conveyor assembly (208).

9. The system of any of claims 5-8, comprising a second tilted top beam (242) disposed at a third angle tilted relative to ground when the header system (112) is in use.

## Patentansprüche

1. Erntevorsatzsystem (112), umfassend:
ein erstes Erntevorsatzsegment (212), umfassend einen Mähbalken (202), der zum Schneiden von Erntegut konfiguriert ist, und einen ersten Teil einer Förderanordnung (208); und
einen Mittelabschnitt (211), umfassend einen geneigten oberen Träger (244) des Mittelabschnitts und einen zweiten Teil der Förderanordnung (208), wobei der Mittelabschnitt (211) konfiguriert ist, um geschnittenes Erntegut von dem ersten Erntevorsatzsegment (212) über den ersten Teil der Förderanordnung (208) aufzunehmen, wobei der geneigte obere Träger (244) des Mittelabschnitts in einem ersten Winkel relativ zum Boden geneigt angeordnet ist, wenn das Erntevorsatzsystem (112) in Gebrauch ist,
wobei das Erntevorsatzsystem (112) **gekennzeichnet ist durch** einen ersten Aktuator (260), der das erste Erntevorsatzsegment (212) über den geneigten oberen Träger (244) des Mittelabschnitts mit dem Mittelabschnitt (211) koppelt, wobei der geneigte obere Träger (244) des Mittelabschnitts an eine oder mehrere Fluidleitungen (262) gekoppelt ist, die konfiguriert sind, um ein Hydraulikfluid zu führen, und wobei der geneigte obere Träger (244) des Mittelabschnitts konfiguriert ist, um ein Reservoir für das Hydraulikfluid zu sein.

2. System nach Anspruch 1, wobei der erste Winkel einen Sichtlinienwinkel (302) umfasst, der es einem Bediener des Erntevorsatzsystems (112) ermöglicht, mindestens einen Teil des geschnittenen Ernteguts im Mittelabschnitt (211) zu erkennen, indem er von einer Kabine (152) eines das Erntevorsatzsystem (112) tragenden Fahrzeugs (100) nach unten blickt und über den geneigten oberen Träger (244) des Mittelabschnitts blickt.

3. System nach einem der Ansprüche 1 bis 2, wobei der geneigte obere Träger (244) des Mittelabschnitts eine quadratische Form oder eine Rechteckform umfasst.

4. System nach einem der Ansprüche 1 bis 3, wobei der erste Aktuator (260) einen hydraulischen Aktuator umfasst und wobei der hydraulische Aktuator über die eine oder die mehreren Leitungen (262) fluidisch an den geneigten oberen Träger (244) des Mittelabschnitts gekoppelt ist.

5. System nach Anspruch 1, umfassend den ersten Aktuator (260), der das erste Erntevorsatzsegment (212) über den geneigten Kopfträger (244) des Mittelabschnitts an den Mittelabschnitt (211) koppelt, wobei das erste Erntevorsatzsegment (212) einen ersten geneigten oberen Träger (240) umfasst, der mechanisch an den ersten Aktuator (260) gekoppelt und konfiguriert ist, um das erste Erntevorsatzsegment (212) basierend auf einer Betätigung des ersten Aktuators (260) zu bewegen, und wobei der erste geneigte obere Träger (240) in einem zweiten Winkel relativ zum Boden geneigt angeordnet ist, wenn das Erntevorsatzsystem (112) in Gebrauch ist.

6. System nach Anspruch 5, wobei der erste Winkel gleich dem zweiten Winkel ist.

7. System nach Anspruch 5 oder 6, wobei der erste geneigte obere Träger (240) an eine oder mehrere Fluidleitungen (262) gekoppelt ist, die konfiguriert sind, um ein Hydraulikfluid zu führen, und wobei der erste geneigte obere Träger (240) konfiguriert ist, um ein Reservoir für das Hydraulikfluid zu sein.

8. System nach einem der Ansprüche 5 bis 7, umfassend:
ein zweites Erntevorsatzsegment (214), das den Mähbalken (202) umfasst und konfiguriert ist, um das Erntegut zu schneiden; und einen dritten Teil der Förderanordnung (208), wobei der Mittelabschnitt (211) konfiguriert ist, um geschnittenes Erntegut von dem zweiten Erntevorsatzsegment (214) über den ersten und den dritten Teil der Förderanordnung (208) aufzunehmen.

9. System nach einem der Ansprüche 5 bis 8, umfassend einen zweiten geneigten oberen Träger (242), der in einem dritten Winkel relativ zum Boden geneigt angeordnet ist, wenn das Erntevorsatzsystem (112) in Gebrauch ist.

## Revendications

1. Système de tête de coupe (112) comprenant :
un premier segment de tête de coupe (212) comprenant une barre de coupe (202) conçue pour couper des cultures, et une première partie d'un ensemble transporteur (208) ; et
une section centrale (211) comprenant une poutre supérieure (244) inclinée de section centrale et une deuxième partie de l'ensemble transporteur (208), dans lequel la section centrale (211) est conçue pour recevoir des cultures coupées provenant du premier segment de tête de coupe (212) par l'intermédiaire de la première partie de l'ensemble transporteur (208), dans lequel la poutre supérieure (244) inclinée de section centrale est disposée à un premier angle incliné par rapport au sol lorsque le système de tête de coupe (112) est utilisé,
le système de tête de coupe (112) étant **caractérisé par** un premier actionneur (260) accouplant le premier segment de tête de coupe (212) à la section centrale (211) par l'intermédiaire de la poutre supérieure (244) inclinée de section centrale, dans lequel la poutre supérieure (244) inclinée de section centrale est accouplée à un ou plusieurs conduits de fluide (262) conçus pour transporter un fluide hydraulique, et dans lequel la poutre supérieure (244) inclinée de section centrale est conçue pour être un réservoir pour le fluide hydraulique.

2. Système selon la revendication 1, dans lequel le premier angle comprend un angle de champ de vision (302) permettant à un opérateur du système de tête de coupe (112) de visualiser au moins une partie de la récolte coupée dans la section centrale (211) en regardant vers le bas à partir d'une cabine (152) d'un véhicule (100) portant le système de tête de coupe (112) et en regardant par-dessus la poutre supérieure (244) inclinée de section centrale.

3. Système selon l'une quelconque des revendications 1 à 2, dans lequel la poutre supérieure (244) inclinée de section centrale comprend une forme carrée ou une forme rectangulaire.

4. Système selon l'une quelconque des revendications 1 à 3, dans lequel le premier actionneur (260) comprend un actionneur hydraulique, et dans lequel l'actionneur hydraulique est accouplé fluidiquement à la poutre supérieure (244) inclinée de section centrale par l'intermédiaire du ou des conduits (262).

5. Système selon la revendication 1, comprenant le premier actionneur (260) accouplant le premier segment de tête de coupe (212) à la section centrale (211) par l'intermédiaire de la poutre supérieure (244) inclinée de section centrale, dans lequel le premier segment de tête de coupe (212) comprend une première poutre supérieure inclinée (240) accouplée mécaniquement au premier actionneur (260) et conçue pour déplacer le premier segment de tête de coupe (212) en fonction d'un actionnement du premier actionneur (260), et dans lequel la première poutre supérieure inclinée (240) est disposée à un deuxième angle incliné par rapport au sol lorsque le système de tête de coupe (112) est utilisé.

6. Système selon la revendication 5, dans lequel le premier angle est égal au deuxième angle.

7. Système selon la revendication 5 ou 6, dans lequel la première poutre supérieure inclinée (240) est accouplée à un ou plusieurs conduits de fluide (262) conçus pour transporter un fluide hydraulique, et dans lequel la première poutre supérieure inclinée (240) est conçue pour être un réservoir pour le fluide hydraulique.

8. Système selon l'une quelconque des revendications 5 à 7, comprenant :
un second segment de tête de coupe (214) comprenant la barre de coupe (202) et conçu pour couper les cultures ; et une troisième partie de l'ensemble transporteur (208), dans lequel la section centrale (211) est conçue pour recevoir les cultures coupées du second segment de tête de coupe (214) par l'intermédiaire des première et troisième parties de l'ensemble transporteur (208).

9. Système selon l'une quelconque des revendications 5 à 8, comprenant une seconde poutre supérieure inclinée (242) disposée à un troisième angle incliné par rapport au sol lorsque le système de tête de coupe (112) est utilisé.
